# FASCICULE DE BREVET EUROPEEN

(11) **EP 0 653 159 B1**
(45) Date de publication et mention de la délivrance du brevet: **18.08.1999**
(21) Numéro de dépôt: 93402774.9
(22) Date de dépôt: 16.11.1993
(51) Int. Cl.: A01N 35/02, A01N 33/04

(54) **Composition désinfectante**
Desinfektionsmittel
Desinfecting composition

(43) Date de publication de la demande: 17.05.1995
(73) Titulaire: Salkin, André, F-76240 Le Mesnil-Esnard (FR)
(72) Inventeur: Salkin, André, F-76240 Le Mesnil-Esnard (FR)
(74) Mandataire: Portal, Gérard

(56) Documents cités:
- EP-A- 0 212 866
- EP-A- 0 252 310
- FR-A- 2 342 074

## Description

La présente invention concerne essentiellement une composition renfermant soit des dérivés aminés, soit des dérivés aldéhydiques pouvant être mis en contact avec des matières chimiques incompatibles sans prise en masse d'agglomérat, d'adhérence, comprenant soit des dérivés aldéhydiques, soit des dérivés aminés respectivement, contenant un dérivé de pyrrolidone, ainsi que son utilisation dans le domaine du nettoyage et de la désinfection de matériel chirurgical.

Dans les documents de la technique antérieure telle que EP-A-0 212 866, EP-A-0 361 033, EP-A-0 252 310 et FR-A-2 349 336, on a décrit diverses compositions antimicrobiennes ou germicides contenant divers ingrédients dont un dérivé de pyrrolidone comme agent dispersant ou filmogène.

Il est à noter que dans le cadre des compositions de l'art antérieur, aucun problème ne se pose de mise en contact avec des produits extérieurs qui risquent de réagir avec le composant de la composition et de conduire à une prise en masse ou des adhérences, en raison de la destination de ces compositions connues.

Par contre, dans le cadre de la présente invention, on cherche à résoudre le nouveau problème technique consistant en la fourniture d'une solution permettant de mettre en contact une composition initialement stable avec un composé externe à la formule pouvant comprendre une substance chimiquement incompatible, sans prise en masse ou formation d'adhérence.

L'invention a également pour but de résoudre le nouveau problème technique consistant en la fourniture d'une solution permettant d'utiliser une composition initialement stable contenant soit une amine, soit une aldéhyde et risquant lors de son utilisation d'être mise en contact avec un composé extérieur à la formule chimiquement incompatible, en particulier contenant soit une aldéhyde, soit une amine, respectivement, les aldéhydes et les amines étant des substances chimiques incompatibles bien connues, sans qu'une agglomération ou une prise en masse ne puisse se produire, ou sans la formation d'adhérence, en permettant ainsi d'utiliser une telle composition pour un usage de désinfection ou de nettoyage, en particulier de matériel chirurgical. En effet, dans le cadre de la désinfection ou du nettoyage du matériel chirurgical, en particulier dans les endoscopes, les appareils d'exploration utilisés dans le domaine médical, munis de microconduits notamment nécessaires aux prélèvements par aspiration pour biopsie, des substances biologiques chimiquement incompatibles pouvant comprendre des protéines, qui sont avant tout des amines, peuvent être présentes, ou même des aldéhydes.

Jusqu'à présent, aucun document de l'état de la technique antérieur ne s'est posé ce problème technique qui est donc nouveau et inventif en lui-même.

Par ailleurs, l'invention fournit pour la première fois, de manière surprenante, une solution à ce nouveau problème technique en découvrant qu'un dérivé de pyrrolidone, lorsqu'il est ajouté à une solution contenant soit une aldéhyde, soit une amine, en particulier à une quantité efficace pour réaliser la désinfection ou le nettoyage, empêche tout risque d'agglomération, de prise en masse ou de formation d'adhérence.

Ainsi, selon un premier aspect, la présente invention fournit l'utilisation d'un dérivé de pyrrolidone pour éviter la prise en masse d'agglomérats ou d'adhérence lors d'une mise en contact d'une composition renfermant des dérivés aminés ou des dérivés aldéhydiques avec des matières chimiques incompatibles, telles que des dérivés aminés, lorsque la composition contient des dérivés aldéhydiques ; ou des dérivés aldéhydiques, lorsque la composition contient des dérivés aminés. De préférence, on utilise au moins 0,001 % en poids du dérivé de pyrrolidone précité.

Selon un mode de réalisation avantageux de ladite composition, celle-ci est caractérisée en ce que le dérivé aminé est un dérivé d'amine primaire et/ou secondaire et/ou tertiaire et/ou un dérivé alkylique et/ou arylique et/ou polyamine et/ou alkylaminoglycine et/ou alkylamine tertiaire.

Selon un mode de réalisation préféré, le dérivé aminé est une diaminopropyllaurylamine.

Dans le cadre de l'invention, on peut utiliser comme amine une amine ayant une activité bactéricide de préférence choisi parmi le groupe consistant en une mono- ou une poly- amine de type primaire, secondaire, tertiaire ou même quaternaire non substituée ou substituée sur au moins un atome d'azote de la fonction amine.

Cette amine peut être choisie parmi l'une ou l'autre des formules chimiques développées suivantes : 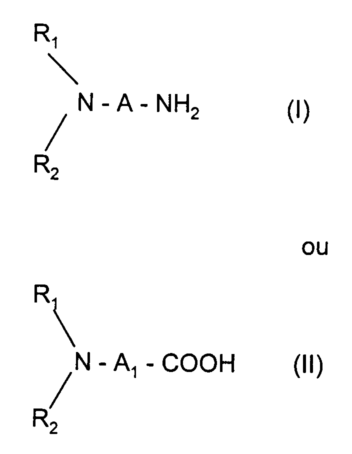 dans lesquelles :
- R₁ est un groupe alkyle linéaire ou ramifié, saturé ou insaturé, comprenant de 8 à 22 atomes de carbone ;
- R₂ est un hydrogène, un groupe alkyle ou hydroxyalkyle comprenant 1 à 4 atomes de carbone ou bien -A-NH₂ ;
- A est un groupe alkylène linéaire ou ramifié comprenant de 1 à 8 atomes de carbone ;
- A₁ est un groupe alkylène linéaire ou ramifié comprenant de 2 à 4 atomes de carbone.

On peut également utiliser comme amine une alkylèneamine pouvant avoir de 1 à 20 atomes de carbone au mieux de 1 à 18 atomes de carbone, encore de préférence une alkylèneamine de formule C₁₈H₄₁N.

L'amine précitée peut également être un produit d'addition d'acide gras et d'alkylèneamine, tel que la lauryldiéthylamine, la laurylpropylèneamine, primaire, secondaire ou tertiaire, ou encore sous forme diamine ou triamine.

Comme aldéhyde précité, on utilisera de préférence la glutaraldéhyde.

La concentration qui de préférence utilisée pour l'amine est comprise entre 0,001 % et 10 % en poids de la composition finale.

Selon un mode de réalisation avantageux de l'invention, les dérivés aldéhydiques précités sont du formaldéhyde ou la glutaraldéhyde.

En ce qui concerne le dérivé aldéhydique précité, la concentration est avantageusement comprise entre 0,001 % et 10 %, encore mieux entre 8 et 10 %, par rapport à la composition finale.

Selon encore un autre mode de réalisation avantageux de l'invention, le dérivé de pyrrolidone précité est une polyvinylpyrrolidone.

La polyvinylpyrrolidone est largement décrite dans les documentations et dictionnaires chimiques et se trouve aisément disponible dans le commerce en étant commercialisé plus particulièrement par la société GAF, USA, sous les appellations PVP K30 et PVP K90. La proportion d'incorporation de polyvinylpyrrolidone peut varier dans de larges limites. On peut aller jusqu'à des concentrations maximales permettant de fabriquer et formuler des produits sous forme de pastille, cachet solide ou de poudre.

Selon un autre mode de réalisation de l'invention, la composition précitée peut être réalisée sous forme liquide, sous forme de gel, de capsule, de pastille ou de poudre, avec l'emploi d'excipient ou véhicule correspondant bien connu à l'homme de l'art.

Il est à noter que dans le cadre de l'invention, l'incorporation de la polyvinylpyrrolidone dans la composition peut se réaliser par simple dissolution au cours de la préparation du mélange. On peut réaliser un léger chauffage par exemple à une température comprise entre 40 et 45°C pour faciliter la dissolution du produit, comme cela est bien connu à l'homme de l'art.

D'autre part, la composition précitée peut être une composition à usage de désinfection ou de nettoyage, en particulier de matériel chirurgical, notamment des endoscopes, appareils d'exploration utilisés dans le domaine médical, munis de microconduits par exemple nécessaires aux prélèvements par aspiration pour biopsie.

Selon un mode de réalisation préférée, la concentration en dérivés aminés précités est de l'ordre de 10 % en poids.

Selon un autre mode de réalisation particulier, la concentration en dérivés aldéhydiques précités est comprise entre 8 et 10 %.

Selon un autre mode de réalisation préféré, la concentration en dérivés de pyrrolidone est comprise entre 0,01 % et 5 % en poids.

Selon un deuxième aspect, la présente invention couvre également l'utilisation d'un dérivé de pyrrolidone dans le domaine du nettoyage et de la désinfection du matériel chirurgical, par exemple et plus particulièrement du nettoyage et de la désinfection des endoscopes, des appareils d'exploration utilisés dans le domaine médical, munis de microconduits, par exemple nécessaires aux prélèvements par aspiration notamment pour biopsie.

L'invention couvre aussi un procédé de nettoyage ou de désinfection et des compositions tels que définis dans les revendications de procédé et de composition.

Cette composition permet une mise en contact de produits chimiques incompatibles, tels que des dérivés aldéhydiques lorsque la composition renferme des dérivés aminés ; ou des dérivés aminés lorsque la composition renferme des dérivés aldéhydiques, sans prise en masse ou formation d'adhérence formant des bouchons rendant le matériel inapte à l'usage prévu.

Dans le cadre de l'invention, on préfère utiliser comme amine, des amines commercialement disponibles telles que celles commercialisées sous la dénomination commerciale LONZABAC 4 et LONZABAC 12, mis dans le commerce par la société LONZA FRANCE, filiale de LONZA S.A., Bâle SUISSE.

Les notices de ces produits indiquent qu'ils ne doivent pas être utilisés tels quels ou en formulation en présence de matières incompatibles qui réagissent immédiatement et forment des agglomérats et adhérences. Il est en effet connu, antérieurement à l'invention, que ces produits aminés, en présence de dérivés aldéhydiques, par exemple en présence de glutaraldéhyde, forment immédiatement un agglomérat épais, à consistance caoutchouteuse, relativement adhérent.

Une simple démonstration permet de visualiser cette prise en masse. Dans le cas d'une préparation en cuve, d'un écoulement ou d'une aspiration par des tuyaux ou des pompes qui contiendraient quelques particules d'une matière incompatible, on constaterait une réaction qui provoquerait une prise en masse et une obturation des tuyauteries.

Ainsi, la présente invention permet d'une manière déterminante de résoudre ce problème technique d'une manière simple, fiable, peu coûteuse, utilisable à l'échelle industrielle.

D'autres buts, caractéristiques et avantages de l'invention apparaîtront clairement à la lumière de la description explicative qui va suivre faite en référence à divers essais comparatifs donnés simplement à titre d'illustration et qui ne sauraient donc en aucune façon limiter la portée de l'invention.

### Exemple 1

### Démonstration de l'activité anti-agglomération ou anti-adhérence de la polyvinylpyrrolidone dans une composition nettoyante à base d'amine

Pour ce faire, diverses compositions N°1 à 6 d'amine sont préparées à partir de l'amine commercialement disponible, dénomination commerciale LONZABAC 12 ou LONZABAC 4 de chez LONZA, à une proportion de 10 % à laquelle peut être rajoutée de la polyvinylpyrrolidone commercialement disponible sous l'appellation PVP K30 ou PVP K90 à une concentration pouvant varier entre 0,01 % et 5 % en poids, cette composition, étant une composition aqueuse préparée à partir de l'eau déionisée, comme indiqué dans le tableau 1 ci-après.

**TABLEAU 1**

| | | | | | | |
|---|---|---|---|---|---|---|
| Compositions N° | 1 | 2 | 3 | 4 | 5 | 6 |
| LONZABAC 12 | 10 % | 10 % | --- | --- | 10 % | --- |
| LONZABAC 4 | --- | --- | 10 % | 10 % | --- | 10 % |
| PVP K30 | 5 % | --- | 3 % | --- | --- | --- |
| PVP K90 | --- | 2 % | --- | 0,01 % | --- | --- |
| H20 QSP | | | | | | |

En introduisant dans 20 ml de chacune des formules, 1 goutte de glutaraldéhyde, il est constaté :
Composition N°1 : changement de couleur (tendance rouge, marron) sans coagulation ni adhérence - Produit restant liquide et fluide.
Composition N°2 : changement de couleur (tendance rouge, marron) sans coagulation ni adhérence - Produit restant liquide et fluide.
Composition N°3 : changement de couleur (tendance rouge, marron) sans coagulation ni adhérence - Produit restant liquide et fluide.
Composition N°4 : changement de couleur (tendance rouge, marron) sans coagulation ni adhérence - Produit restant liquide et fluide.
Composition N°5 : prise en masse spongieuse immédiate ressemblant entre la mousse de polyuréthanne durant les premières heures et après plusieurs jours, ayant la consistance du chocolat (avec adhérences).
Composition N°6 : prise en masse spongieuse immédiate ressemblant entre la mousse de polyuréthanne durant les premières heures et après plusieurs jours, ayant la consistance du chocolat (avec adhérences).

On constate ainsi que l'ajout de polyvinylpyrrolidone permet d'empêcher la prise en masse d'agglomérats, et la formation d'adhérence.

### Exemple 2

### Essai d'activité anti-agglomération ou anti-formation d'adhérence de la polyvinylpyrrolidone dans une solution de glutaraldéhyde

On prépare des compositions de glutaraldéhyde N°7 à 9 contenant ou non diverses proportions de polyvinylpyrrolidone commercialement disponible sous les références K30 et K90 en solution aqueuse déionisée comme suit :

**TABLEAU 2**

| | | | |
|---|---|---|---|
| Compositions N° | 7 | 8 | 9 |
| Glutaraldéhyde | 10 % | 8 % | 10 % |
| PVP K30 | 1 % | --- | --- |
| PVP K90 | --- | 0,2 % | --- |
| H20 QSP | | | |

En mettant en contact les compositions N°7, 8 et 9 avec des dérivés aminés par exemple et d'une manière non exhaustive, la composition d'amine commercialement disponible référence LONZABAC 12 de chez LONZA à raison de 1 goutte pour 20 ml de compositions N°7, N°8 ou N°9, on constate que dans le cas de la composition N°7 et de la composition N°8, la composition changera de couleur mais restera fluide.

Par contre, dans le cas de la composition N°9, ne contenant pas de polyvinylpyrrolidone, il se produit une prise en masse rapide formant un agglomérat.

Ainsi, l'ajout de polyvinylpyrrolidone à une solution d'aldéhyde permet d'éviter la prise en masse lors d'une mise en contact avec une amine.

## Revendications

1. Utilisation d'un dérivé de pyrrolidone pour éviter la prise en masse d'agglomérats ou d'adhérence lors d'une mise en contact d'une composition renfermant des dérivés aminés ou des dérivés aldéhydiques avec des matières chimiques incompatibles, telles que des dérivés aminés, lorsque la composition contient des dérivés aldéhydiques ; ou des dérivés aldéhydiques, lorsque la composition contient des dérivés aminés.

2. Utilisation selon la revendication 1, caractérisée en ce que ladite composition contient au moins 0,001 % en poids du dérivé de pyrrolidone précité.

3. Utilisation selon la revendication 1 ou 2, caractérisée en ce que le dérivé de pyrrolidone est une polyvinylpyrrolidone.

4. Utilisation selon l'une quelconque des revendications 1 à 3, caractérisée en ce que la concentration en polyvinyle pyrrolidone est au moins 0,001 % jusqu'à une concentration maximum permettant de fabriquer et de formuler sous forme de pastilles, cachets ou poudre.

5. Utilisation selon l'une des revendications 1 à 4, caractérisée en ce que le dérivé aminé est un dérivé d'amine primaire et/ou secondaire et/ou tertiaire et/ou dérivé alkylique et/ou arylique et/ou polyamine et/ou alkylaminoglycine et/ou alkylamine tertiaire.

6. Utilisation selon l'une des revendications 1 à 5, caractérisée en ce que le dérivé aminé est une diamino propyle lauryl amine.

7. Utilisation selon l'une des revendications 1 à 6, caractérisée en ce que les dérivés aldéhydiques sont du formaldéhyde ou glutaraldéhyde.

8. Utilisation selon l'une quelconque des revendications 1 à 7, caractérisée en ce que la composition est réalisée sous forme liquide, gel, capsules, pastilles ou poudre.

9. Utilisation selon l'une des revendications 1 à 8, caractérisée en ce que la concentration en dérivés amines précités est comprise entre 0,001 % et 10 % en poids.

10. Utilisation selon l'une des revendications 1 à 9, caractérisée en ce que la concentration en dérivés aldéhydiques est comprise entre 0,001 et 10 % en poids et de préférence entre 8 et 10 %.

11. Utilisation selon l'une des revendications 1 à 10, caractérisée en ce que la concentration en dérivés de pyrrolidone est comprise entre 0,01 % et 5 % en poids.

12. Utilisation selon l'une quelconque des revendications 1 à 11, dans le domaine de la désinfection ou du nettoyage.

13. Utilisation selon l'une quelconque des revendications 1 à 11, dans le domaine du nettoyage et de la désinfection du matériel chirurgical, par exemple et plus particulièrement du nettoyage et de la désinfection des endoscopes, appareils d'exploration utilisés dans le domaine médical, munis de micro-conduits nécessaires au prélèvement par aspiration pour biopsie, ladite composition permettant lors d'une mise en contact avec des produits chimiques incompatibles, tels que les dérivés aldéhydiques lorsque la composition renferme des dérivés aminés ; ou des dérivés aminés lorsque la composition renferme des dérivés aldéhydiques, d'éviter une prise en masse ou formation d'adhérence formant des bouchons rendant le matériel inapte à l'usage prévu.

14. Procédé de désinfection ou de nettoyage, comprenant l'emploi d'une composition de désinfection ou de nettoyage contenant soit un dérivé aminé, soit un dérivé aldéhydique, en une quantité efficace pour réaliser la désinfection ou le nettoyage, caractérisé en ce qu'on ajoute à ladite composition, préalablement à ladite désinfection ou nettoyage, au moins 0,001 % en poids d'un dérivé de pyrrolidone, en évitant ainsi la prise en masse d'agglomérats ou d'adhérence lors d'une mise en contact avec des matières chimiques incompatibles, lors de l'emploi de ladite composition.

15. Procédé selon la revendication 14, caractérisé en ce qu'on réalise une désinfection ou un nettoyage du matériel chirurgical, par exemple et plus particulièrement un nettoyage et une désinfection des endoscopes, appareils d'exploration utilisés dans le domaine médical, munis de micro-conduits nécessaires au prélèvement par aspiration pour biopsie, en évitant ainsi une prise en masse ou une formation d'adhérence formant des bouchons, rendant le matériel inapte à l'usage prévu.

16. Composition renfermant des dérivés aminés à l'exclusion des amines quaternaires ou composition renfermant des dérivés aldéhydiques, pouvant être mise en contact avec des matières chimiques incompatibles sans formation de prise en masse d'agglomérats, d'adhérence, caractérisée en ce qu'elle contient essentiellement, soit ledit dérivé aminé, soit ledit dérivé aldéhydique, et un dérivé de pyrrolidone à une concentration comprise entre au moins 0,001 % et 5 % en poids, à l'exclusion d'une concentration de 5 % en poids de polyvinylpyrrolidone, lorsque le dérivé aldéhydique est la glutaraldéhyde.

17. Composition renfermant des dérivés aminés, caractérisée en ce qu'elle contient essentiellement comme dérivés aminés une amine choisie parmi le groupe consistant d'une amine choisie parmi l'une ou l'autre des formules chimiques développées suivantes : 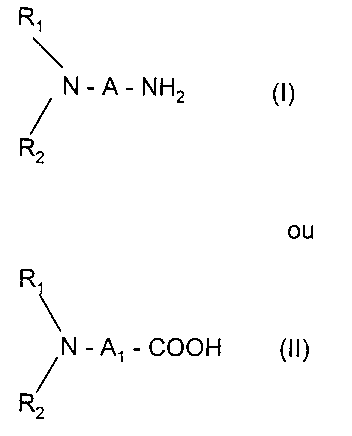 dans lesquelles :
- R₁ est un groupe alkyle linéaire ou ramifié, saturé ou insaturé, comprenant de 8 à 22 atomes de carbone ;
- R₂ est un hydrogène, un groupe alkyle ou hydroxyalkyle comprenant 1 à 4 atomes de carbone ou bien -A-NH₂ ;
- A est un groupe alkylène linéaire ou ramifié comprenant de 1 à 8 atomes de carbone ;
- A₁ est un groupe alkylène linéaire ou ramifié comprenant de 2 à 4 atomes de carbone ;
ou une alkylèneamine ayant de 1 à 20 atomes de carbone, ou mieux de 1 à 18 atomes de carbone, encore de préférence une alkylèneamine de formule C₁₈H₄₁N ;
ou un produit d'addition d'acide gras et d'alkylèneamine, tel que la lauryldiéthylamine, la laurylpropylèneamine, primaire, secondaire ou tertiaire, ou encore sous forme diamine ou triamine ;
et un dérivé de pyrrolidone à une concentration comprise entre au moins 0,001 % et 5 % en poids.

18. Composition renfermant des dérivés aldéhydiques, caractérisée en ce qu'elle contient essentiellement ledit dérivé aldéhydique à une concentration comprise entre 0,001 % et 10 % en poids ; et un dérivé de pyrrolidone à une concentration comprise entre au moins 0,001 % et 5 % en poids, à l'exclusion d'une concentration de 5 % en poids en polyvinylpyrrolidone, lorsque le dérivé aldéhydique est la glutaraldéhyde.

19. Composition selon la revendication 18, caractérisée en ce que la concentration du dérivé aldéhydique est comprise entre 8 et 10 % en poids.

20. Composition selon la revendication 18 ou 19, caractérisée en ce que le dérivé aldéhydique est la formaldéhyde ou la glutaraldéhyde.

21. Composition selon l'une des revendications 17 à 20, caractérisée en ce que le dérivé de pyrrolidone est une polyvinylpyrrolidone.

## Claims

1. Use of a pyrrolidone derivative to prevent agglomeration or adhesion when a composition containing amino derivatives or aldehydic derivatives is brought into contact with incompatible chemical substances such as amino derivatives when the composition contains aldehydic derivatives, or aldehydic derivatives when the composition contains amino derivatives.

2. Use according to Claim 1, characterized in that said composition contains at least 0.001% by weight of the above-mentioned pyrrolidone derivative.

3. Use according to Claim 1 or 2, characterized in that the pyrrolidone derivative is a polyvinylpyrrolidone.

4. Use according to any one of Claims 1 to 3, characterized in that the polyvinylpyrrolidone concentration is at least 0.001% up to a maximum concentration allowing manufacture and formulation as lozenges, tablets or powder.

5. Use according to one of Claims 1 to 4, characterized in that the amino derivative is a primary and/or secondary and/or tertiary amine derivative and/or an alkyl and/or aryl derivative and/or a polyamine and/or an alkylaminoglycine and/or a tertiary alkylamine.

6. Use according to one of Claims 1 to 5, characterized in that the amino derivative is a diaminopropyllaurylamine.

7. Use according to one of Claims 1 to 6, characterized in that the aldehydic derivatives are formaldehyde or glutaraldehyde.

8. Use according to any one of Claims 1 to 7, characterized in that the composition is produced in the form of a liquid, a gel, capsules, lozenges or powder.

9. Use according to one of Claims 1 to 8, characterized in that the concentration of the above-mentioned amino derivatives is between 0.001% and 10% by weight.

10. Use according to one of Claims 1 to 9, characterized in that the concentration of aldehydic derivatives is between 0.001 and 10% by weight and preferably between 8 and 10%.

11. Use according to one of Claims 1 to 10, characterized in that the concentration of pyrrolidone derivatives is between 0.01% and 5% by weight.

12. Use according to any one of Claims 1 to 11 in the field of disinfection or cleaning.

13. Use according to any one of Claims 1 to 11 in the field of the cleaning and disinfection of surgical equipment, for example, and more particularly, the cleaning and disinfection of endoscopes, i.e. exploratory instruments used in the medical field which are equipped with microducts necessary for taking biopsy specimens by aspiration, said composition making it possible, during contact with incompatible chemical substances such as aldehydic derivatives when the composition contains amino derivatives, or amino derivatives when the composition contains aldehydic derivatives, to avoid agglomeration or adhesion, which forms blockages rendering the equipment unsuitable for the intended use.

14. Disinfection or cleaning method comprising the use of a disinfecting or cleaning composition containing either an amino derivative or an aldehydic derivative in an effective amount for carrying out disinfection or cleaning, characterized in that at least 0.001% by weight of a pyrrolidone derivative is added to said composition prior to said disinfection or cleaning so as to avoid agglomeration or adhesion during contact with incompatible chemical substances when said composition is used.

15. Method according to Claim 14, characterized in that it is applied to the disinfection or cleaning of surgical equipment, for example, and more particularly, the cleaning and disinfection of endoscopes, i.e. exploratory instruments used in the medical field which are equipped with microducts necessary for taking biopsy specimens by aspiration, thereby avoiding agglomeration or adhesion, which forms blockages rendering the equipment unsuitable for the intended use.

16. Composition containing amino derivatives except for quaternary amines, or composition containing aldehydic derivatives, which can be brought into contact with incompatible chemical substances without agglomeration or adhesion, characterized in that it contains essentially either said amino derivative, or said aldehydic derivative, and a pyrrolidone derivative at a concentration of between at least 0.001% and 5% by weight, with the exclusion of a polyvinylpyrrolidone concentration of 5% by weight when the aldehydic derivative is glutaraldehyde.

17. Composition containing amino derivatives, characterized in that it contains essentially, as the amino derivatives, an amine selected from the group consisting of an amine of one or other of the following structural chemical formulae: 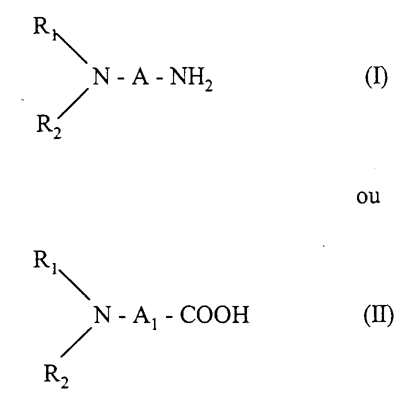 in which:
- R₁ is a saturated or unsaturated, linear or branched alkyl group comprising from 8 to 22 carbon atoms;
- R₂ is a hydrogen, an alkyl or hydroxyalkyl group comprising 1 to 4 carbon atoms, or -A-NH₂;
- A is a linear or branched alkylene group comprising from 1 to 8 carbon atoms; and
- A₁ is a linear or branched alkylene group comprising from 2 to 4 carbon atoms;
or an alkyleneamine having from 1 to 20 carbon atoms or, preferably, from 1 to 18 carbon atoms, particularly preferably an alkyleneamine of the formula C₁₈H₄₁N;
or a fatty acid/alkyleneamine addition product such as lauryldiethylamine or laurylpropyleneamine, which is primary, secondary or tertiary or in the form of a diamine or triamine;
and a pyrrolidone derivative at a concentration of between at least 0.001% and 5% by weight.

18. Composition containing aldehydic derivatives, characterized in that it essentially contains said aldehydic derivative at a concentration of between 0.001% and 10% by weight and a pyrrolidone derivative at a concentration of between at least 0.001% and 5% by weight, with the exclusion of a polyvinylpyrrolidone concentration of 5% by weight when the aldehydic derivative is glutaraldehyde.

19. Composition according to Claim 18, characterized in that the concentration of the aldehydic derivative is between 8 and 10% by weight.

20. Composition according to Claim 18 or 19, characterized in that the aldehydic derivative is formaldehyde or glutaraldehyde.

21. Composition according to one of Claims 17 to 20, characterized in that the pyrrolidone derivative is a polyvinylpyrrolidone.

## Patentansprüche

1. Verwendung eines Pyrrolidon-Derivats zur Vermeidung des Zusammenbackens von Agglomeraten oder einer Adhärenz beim Inberührungbringen einer Zusammensetzung, die Amin-Derivate oder Aldehyd-Derivate enthält, mit inkompatiblen chemischen Stoffen, wie Amin-Derivaten, wenn die Zusammensetzung Aldehyd-Derivate enthält; oder Aldehyd-Derivaten, wenn die Zusammensetzung Amin-Derivate enthält.

2. Verwendung nach Anspruch 1, dadurch gekennzeichnet, daß die Zusammensetzung zumindest 0,001 Masse-% des Pyrrolidon-Derivats enthält.

3. Verwendung nach Anspruch 1 oder 2, dadurch gekennzeichnet, daß das Pyrrolidon-Derivat Polyvinylpyrrolidon ist.

4. Verwendung nach einem der Ansprüche 1 bis 3, dadurch gekennzeichnet, daß die Polyvinylpyrrolidon-Konzentration zumindest 0,001 % bis zu einer maximalen Konzentration beträgt, die die Herstellung und Formulierung in Form von Pastillen, Cachets oder Pulver ermöglicht.

5. Verwendung nach einem der Ansprüche 1 bis 4, dadurch gekennzeichnet, daß das Amin-Derivat ein primäres und/oder sekundäres und/oder tertiäres Amin-Derivat und/oder Alkyl- und/oder Aryl- und/oder Polyamin- und/oder Alkylaminoglycin- und/oder tertiäres Alkylamin-Derivat ist.

6. Verwendung nach einem der Ansprüche 1 bis 5, dadurch gekennzeichnet, daß das Amin-Derivat ein Diaminopropyllaurylamin ist.

7. Verwendung nach einem der Ansprüche 1 bis 6, dadurch gekennzeichnet, daß die Aldehyd-Derivate Formaldehyd oder Glutaraldehyd sind.

8. Verwendung nach einem der Ansprüche 1 bis 7, dadurch gekennzeichnet, daß die Zusammensetzung in Form einer Flüssigkeit, eines Gels, von Kapseln, Pastillen oder Pulver hergestellt ist.

9. Verwendung nach einem der Ansprüche 1 bis 8, dadurch gekennzeichnet, daß die Amin-Derivat-Konzentration zwischen 0,001 Masse-% und 10 Masse-% beträgt.

10. Verwendung nach einem der Ansprüche 1 bis 9, dadurch gekennzeichnet, daß die Aldehyd-Derivat-Konzentration zwischen 0,001 und 10 Masse-% und vorzugsweise zwischen 8 und 10 Masse-% beträgt.

11. Verwendung nach einem der Ansprüche 1 bis 10, dadurch gekennzeichnet, daß die Pyrrolidon-Derivat-Konzentration zwischen 0,01 Masse-% und 5 Masse-% beträgt.

12. Verwendung nach einem der Ansprüche 1 bis 11 auf dem Gebiet der Desinfektion oder Reinigung.

13. Verwendung nach einem der Ansprüche 1 bis 11 auf dem Gebiet der Reinigung und der Desinfektion von chirurgischem Material, beispielsweise und insbesondere der Reinigung und der Desinfektion von Endoskopen, im medizinischen Bereich verwendeten Untersuchungsgeräten, die mit für die Entnahme durch Absaugen zwecks einer Biopsie notwendigen Mikroleitungen versehen sind, wobei die Zusammensetzung beim Inberührungbringen mit inkompatiblen chemischen Produkten, wie Aldehyd-Derivaten, wenn die Zusammensetzung Amin-Derivate umfaßt; oder Amin-Derivaten, wenn die Zusammensetzung Aldehyd-Derivate umfaßt, die Vermeidung eines Zusammenbackens oder der Bildung einer Adhärenz, wodurch Klumpen gebildet werden, die das Material für die vorgesehene Verwendung ungeeignet machen, ermöglicht.

14. Verfahren zur Desinfektion oder zur Reinigung, welches die Verwendung einer Zusammensetzung zur Desinfektion oder zur Reinigung umfaßt, die entweder ein Amin-Derivat oder ein Aldehyd-Derivat in einer wirksamen Menge enthält, um die Desinfektion oder die Reinigung durchzuführen, dadurch gekennzeichnet, daß der Zusammensetzung, vor der Desinfektion oder Reinigung, zumindest 0,001 Masse-% eines Pyrrolidon-Derivats zugesetzt werden, wodurch das Zusammenbacken von Agglomeraten oder einer Adhärenz beim Inberührungbringen mit inkompatiblen chemischen Stoffen bei der Verwendung der Zusammensetzung vermieden wird.

15. Verfahren nach Anspruch 14, dadurch gekennzeichnet, daß eine Desinfektion oder Reinigung von chirurgischem Material, beispielsweise und insbesondere eine Reinigung und eine Desinfektion von Endoskopen, im medizinischen Bereich verwendeten Untersuchungsgeräten, die mit für die Entnahme durch Absaugen zwecks einer Biopsie notwendigen Mikroleitungen versehen sind, durchgeführt werden, wobei so ein Zusammenbacken oder die Bildung einer Adhärenz, wodurch Klumpen gebildet werden, die das Material für die vorgesehene Verwendung ungeeignet machen, vermieden wird.

16. Zusammensetzung, welche Amin-Derivate enthält, wobei quaternäre Amin-Derivate ausgeschlossen sind, oder Zusammensetzungen, welche Aldehyd-Derivate enthalten, die mit inkompatiblen chemischen Stoffen ohne Bildung eines Zusammenbackens von Agglomeraten, einer Adhärenz, in Berührung gebracht werden können, dadurch gekennzeichnet, daß sie im wesentlichen entweder das Amin-Derivat oder das Aldehyd-Derivat und ein Pyrrolidon-Derivat in einer Konzentration zwischen zumindest 0,001 Masse-% und 5 Masse-% enthält, wobei eine Konzentration von 5 Masse-% Polyvinylpyrrolidon ausgeschlossen ist, wenn das Aldehyd-Derivat Glutaraldehyd ist.

17. Zusammensetzung, welche Amin-Derivate enthält, dadurch gekennzeichnet, daß sie im wesentlichen als Amin-Derivate ein Amin enthält, das ausgewählt ist aus der Gruppe bestehend aus einem Amin ausgewählt aus einer der im folgenden dargestellten chemischen Formeln: 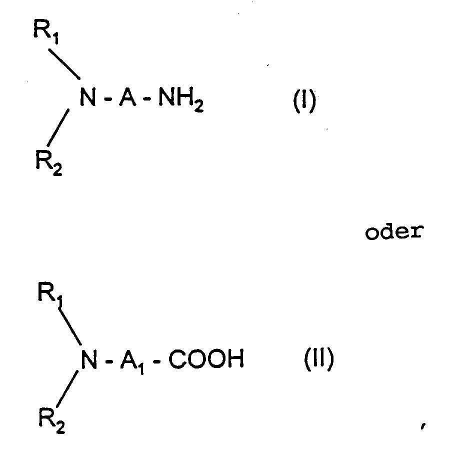 worin:
- R₁ eine lineare oder verzweigte, gesättigte oder ungesättigte Alkyl-Gruppe mit 8 bis 22 Kohlenstoffatomen bedeutet;
- R₂ ein Wasserstoff, eine Alkyl- oder Hydroxyalkyl-Gruppe mit 1 bis 4 Kohlenstoffatomen oder auch -A-NH₂ darstellt;
- A eine lineare oder verzweigte Alkylen-Gruppe mit 1 bis 8 Kohlenstoffatomen ist;
- A₁ eine lineare oder verzweigte Alkylen-Gruppe mit 2 bis 4 Kohlenstoffatomen bedeutet;
oder einem Alkylenamin mit 1 bis 20 Kohlenstoffatomen, vorzugsweise 1 bis 18 Kohlenstoffatomen, bevorzugter einem Alkenylamin der Formel C₁₈H₄₁N;
oder einem Additionsprodukt einer Fettsäure und eines Alkylenamins, wie Lauryldiethylamin, Laurylpropylenamin, primär, sekundär oder tertiär, oder auch in Diamin- oder Triamin-Form;
und ein Pyrrolidon-Derivat in einer Konzentration zwischen zumindest 0,001 Masse-% und 5 Masse-%.

18. Zusammensetzung, welche Aldehyd-Derivate enthält, dadurch gekennzeichnet, daß sie im wesentlichen das Aldehyd-Derivat in einer Konzentration zwischen 0,001 Masse-% und 10 Masse-% enthält; und ein Pyrrolidon-Derivat in einer Konzentration zwischen zumindest 0,001 Masse-% und 5 Masse-%, wobei eine Konzentration von 5 Masse-% Polyvinylpyrrolidon ausgeschlossen ist, wenn das Aldehyd-Derivat Glutaraldehyd ist.

19. Zusammensetzung nach Anspruch 18, dadurch gekennzeichnet, daß die Konzentration des Aldehyd-Derivats zwischen 8 und 10 Masse-% beträgt.

20. Zusammensetzung nach Anspruch 18 oder 19, dadurch gekennzeichnet, daß das Aldehyd-Derivat Formaldehyd oder Glutaraldehyd ist.

21. Zusammensetzung nach einem der Ansprüche 17 bis 20, dadurch gekennzeichnet, daß das Pyrrolidon-Derivat Polyvinylpyrrolidon ist.
